# DEMANDE DE BREVET EUROPEEN

(11) **EP 2 540 376 A1**
(43) Date de publication de la demande: **02.01.2013**
(21) Numéro de dépôt: 12290193.7
(22) Date de dépôt: 08.06.2012
(51) Int. Cl.: B01D 53/14, C10L 3/10

(54) **Procédé de désacidification d'un gaz avec plusieurs étapes de mise en contact à co-courant avec une solution absorbante**

(30) Priorité: 29.06.2011 FR 1102030
(71) Demandeur: IFP Energies nouvelles, 92852 Rueil-Malmaison Cedex (FR)
(72) Inventeur: Raynal, Ludovic, 69600 Oullins (FR)

(57) **Abrégé**

On effectue une mise en oeuvre de plusieurs étapes de mise en contact étagée en mode co-courant dans une succession de zone de contact qui peuvent être verticales ou horizontales avec une circulation des phases gaz et liquide en mode contre-courant entre les zones de contact. Le gaz à traiter arrivant par le conduit 1 circule successivement dans les contacteurs à co-courant C1, puis C2, puis C3. La solution absorbante arrivant par le conduit 7 circule successivement dans les contacteurs C3, puis C2 puis C1. Dans chacun des contacteurs, le gaz et le liquide circulent à co-courant, c'est à dire qu'ils traversent le contacteur, dans le même sens et dans la même direction.

## Description

La présente invention concerne le domaine des procédés de désacidification d'un gaz avec une solution absorbante. L'invention porte sur la mise en contact du gaz avec la solution absorbante.

Dans les procédés de traitement de gaz par mise en contact du gaz avec un liquide, les procédés de distillation, de distillation réactive, de traitement ou de lavage de gaz, les transferts de masse et de chaleur entre une phase gaz et une phase liquide, sont réalisés au moyen de technologies, appelés contacteurs, qui favorisent ces transferts. Il existe trois grands types de contacteurs, les garnissages vrac, les garnissages structurés et les plateaux de colonnes. Quel que soit le choix de la technologie, le contact entre les deux phases gaz et liquide est généralement réalisé dans une colonne opérée à contre-courant, c'est-à-dire où le gaz suit un mouvement globalement vertical ascendant et le liquide suit un mouvement globalement vertical descendant. Ce mode de réalisation est imposé du fait de la volonté de mettre en contact la phase gaz de plus en plus épurée avec une solution de liquide de moins en moins chargée et ainsi de ne pas être limité par les contraintes d'équilibre thermodynamique. Dans le cas des procédés de distillation, le fractionnement de deux composants nécessite un grand nombre de plateaux théoriques d'équilibre (de l'ordre de la dizaine ou de quelques dizaines), ce qui se traduit par un nombre encore plus grand de plateaux réels dont l'efficacité est généralement proche mais généralement inférieure à 1. Dans le cas particulier du captage de CO₂, ou de la désacidification d'un gaz naturel, le nombre de plateaux théoriques requis est très faible, de l'ordre de l'unité. Néanmoins il faut un grand nombre de plateaux réels du fait de la très faible efficacité des plateaux, proche de 0,1. Cette faible efficacité est due à la faible solubilité des espèces à traiter et aux fortes limitations au transfert de masse en phase gaz/vapeur et/ou en phase liquide.

Les plateaux de colonne pour colonnes de distillation de lavage ou de traitement de gaz ont été développés depuis de nombreuses années et leur dimensionnement est bien établi pour ce qui relève de plateaux standards. Les plateaux sont essentiellement dimensionnés pour des applications de distillation et rarement pour des applications de traitement de gaz qui ne sont pas du tout limitées par les mêmes phénomènes. Dans le cas des applications de distillation, un grand nombre de plateaux théoriques, en général plusieurs dizaines, est généralement requis. Comme les équilibres thermodynamiques sont extrêmement limitant et les plateaux actuels obtiennent des efficacités proches de 100 % (cette efficacité étant le ratio entre la conversion obtenue avec le plateau réel et celle obtenue pour un plateau théorique parfaitement mélangé) il faut un grand nombre de plateaux réels, ou de grandes hauteurs de garnissages. Les phénomènes de transfert sont peu limitatifs, et le procédé est dimensionné par les aspects thermodynamiques ce qui implique une circulation des flux à contre-courant dans la colonne. Le liquide s'écoule selon un mouvement d'ensemble vertical descendant, le gaz ayant un mouvement d'ensemble ascendant vertical.

Dans le cas du captage de CO₂, et du traitement de gaz, il est courant de s'appuyer sur les bases technologiques développées pour la distillation et on retrouve donc les mêmes configurations, utilisation des mêmes technologies (plateaux, garnissages vrac, garnissages structurés..) avec une même mise en oeuvre (écoulement vertical, ascendant pour le gaz et descendant pour le liquide). Ainsi dans les ouvrages de référence traitant de la distillation et de l'absorption, seul le mode de mise en oeuvre à contre-courant est discuté. Or le nombre de plateaux théoriques requis pour des performances d'absorption sont très faibles de l'ordre de quelques unités, voire dans le cas du captage du CO₂ un nombre qui peut être inférieur à 2. Il est donc intéressant de revoir les critères de dimensionnement des installations d'absorption. Ce en particulier dans le cas d'un captage de CO₂ contenu dans des fumées en post-combustion par un lavage avec une solution absorbante d'amine (par exemple avec une solution aqueuse de MEA à 30 % poids), car les colonnes sont caractérisées par de très grandes dimensions, de l'ordre de 10 m de diamètre pour plus de 30 m de haut, et un coût très important. Le dimensionnement de ces colonnes est issu du respect de la meilleure efficacité possible pour un écoulement fixé à contre-courant et pour une perte de charge minimale, de l'ordre de 1 à 5 mbar/m. Les contraintes de l'écoulement des phases fixent un diamètre minimum de la colonne. Le diamètre une fois connu, il faut alors déterminer la hauteur de la colonne afin de respecter les performances recherchées. Ces performances sont en grande partie liées au coefficient de transfert de masse, *k_{L}a*, variant typiquement sur une gamme d'environ 5.10⁻³ à 2.10⁻² s⁻¹. Ces faibles valeurs, ainsi que la faible solubilité du gaz acide dans la solution absorbante, entraînent des valeurs d'efficacité de contact entre le gaz et le liquide très faibles, variant entre 10 et 20% ce qui, malgré un faible nombre de plateaux théoriques requis, nécessite un grand nombre de plateaux réels, ou de façon équivalente, des grandes hauteurs de lits de garnissages.

Il faut enfin noter que la consommation énergétique requise à la mise en circulation du gaz au travers de ces colonnes peut représenter jusqu'à 10% du coût de fonctionnement de l'unité.

Il est donc très intéressant de développer des mises en oeuvre et technologies associées afin de réduire les coûts d'investissement et de fonctionnement de ces procédés. C'est l'objet de la présente invention.

Il existe néanmoins des procédés de traitement de gaz qui fonctionnent en mode co-courant descendant, comme par exemple des unités de lavage à la soude ou le procédé RedOx d'épuration de gaz décrit dans le document US 4,741,888) permettant de réaliser une étape de finition sur des gaz peu chargés en composés acides. Cependant, le traitement est effectué en une seule étape, avec en général un débit de liquide injecté en très large excès par rapport au débit de gaz à traiter.

La présente invention propose une mise en oeuvre de mise en contact étagée en mode co-courant dans une succession de zone de contact qui peuvent être verticales ou horizontales avec une circulation des phases gaz et liquide en mode contre courant entre les zones de contact. Il s'agit donc de découper le procédé en plusieurs étapes, qui à l'échelle élémentaire relèvent d'une mise en contact à co-courant, et à l'échelle du procédé mettent les flux gaz et liquide en contact à contre-courant.

De manière générale, l'invention a pour objet un procédé de désacidification d'un gaz de charge comportant au moins l'un des composés acides CO₂ et H₂S, dans lequel on effectue les étapes suivantes :
a) on met en contact ledit gaz de charge avec une solution absorbante liquide enrichie en composés acides produite à l'étape b) dans un premier contacteur à co-courant, le gaz de charge et la solution absorbante parcourant selon une même direction le premier contacteur depuis une entrée jusqu'à une sortie, pour produire un gaz appauvri en composés acides et une solution absorbante chargée en composés acides,
b) on met en contact ledit gaz appauvri en composés acides avec une solution absorbante liquide dans un deuxième contacteur à co-courant, le gaz et la solution absorbante parcourant selon une même direction le deuxième contacteur depuis une entrée jusqu'à une sortie, pour produire un gaz pauvre en composés acides et ladite solution absorbante liquide enrichie en composés acides mise en oeuvre à l'étape a).

Selon l'invention, on peut effectuer l'étape suivante :
c) on met en contact ledit gaz pauvre en composés acides avec un liquide absorbant dans un troisième contacteur à co-courant, le gaz et le liquide parcourant selon une même direction le troisième contacteur depuis une entrée jusqu'à une sortie, pour produire un gaz traité et la solution absorbante liquide mise en oeuvre à l'étape b).

Le gaz et le liquide peuvent parcourir les contacteurs à co-courant selon une direction verticale descendante. Alternativement, le gaz et le liquide peuvent parcourir les contacteurs à co-courant selon une direction horizontale.

Les contacteurs peuvent comporter un garnissage qui développe une aire géométrique supérieure à 200 m²/m³ et de préférence supérieure à 400m²/m³.

On peut faire circuler le gaz dans les contacteurs à une vitesse supérieure à 1 m/s, de préférence supérieure à 2m/s, voire 4m/s.

On peut prélever une portion d'au moins un des deux flux choisis parmi le gaz et la solution absorbante liquide issus d'un des contacteurs, puis on peut introduire ladite portion à l'entrée dudit contacteur.

On peut prélever une portion d'un mélange composé du gaz et de la solution absorbante issu de la sortie d'un des contacteurs, puis on peut introduire ladite portion à l'entrée dudit contacteur.

On peut augmenter la pression de ladite portion avant de l'introduire dans le contacteur.

Avant d'effectuer l'étape a), on peut refroidir ladite solution absorbante liquide enrichie en composés acides produite à l'étape b).

On peut régénérer la solution absorbante chargée en composés acides produite à l'étape a) de manière à libérer des composés acides et produire ladite solution absorbante mise en oeuvre à l'étape b) ou ledit liquide absorbant mis en oeuvre à l'étape c).

La solution absorbante peut être composée d'une solution aqueuse comportant des amines.

Le gaz de charge peut être choisi parmi l'un des gaz suivants : une fumée de combustion, un gaz naturel, un gaz obtenu en queue du procédé Claus, un gaz de synthèse, un gaz issu de la fermentation de biomasse, un effluent issu d'une cimenterie et un gaz issu d'une usine de sidérurgie.

La mise en oeuvre du procédé selon l'invention est possible du fait, d'une part, de la faible limitation thermodynamique des procédés de lavage de gaz par des solutions absorbantes de type amines et, d'autre part, car, dans ces procédés, et contrairement aux cas de distillation faisant référence, on peut contrôler les débits de gaz et de liquide indépendamment (le débit de gaz est fixé par le procédé, un débit minimum de liquide y correspond mais celui-ci peut être significativement modifié si l'opérateur le souhaite). La mise en oeuvre en mode co-courant permet d'obtenir un écoulement induisant des coefficients de transfert de masse significativement supérieurs à ceux obtenus avec des plateaux ou des garnissages opérés en contre-courant. Ainsi la circulation en co-courant à l'échelle d'une colonne permet, d'une part, d'utiliser des systèmes de distribution de gaz et de liquide induisant un très bon mélange des phases sans coût énergétique sur la phase gaz et, d'autre part, d'utiliser des technologies de contact entre le gaz et le liquide très efficaces comme par exemple des mélangeurs statiques ou des garnissages à grande surface spécifique qui maintiennent une grande efficacité de contact entre les deux phases gaz et liquide. Un autre avantage majeur de la mise en circulation à co-courant est d'éviter les contraintes d'engorgement propres aux écoulements à contre-courant. En effet, dans le cas classique d'une mise en oeuvre à contre-courant, il faut faire en sorte que le diamètre de la colonne soit suffisamment grand pour limiter les vitesses des phases et assurer ainsi que le gaz ascendant ne freine le liquide descendant et inversement. Ce mode de mise en contact requiert des faibles vitesses et, donc, induit des diamètres de colonne de grandes dimensions. Afin de limiter la taille des installations fonctionnant à contre-courant, on utilise alors des garnissages assez capacitifs, c'est à dire permettant la circulation de débits importants au détriment de garnissages efficaces, qui s'engorgent plus facilement mais qui ont des efficacités de transfert de masse bien plus grandes. Dans le cas d'une mise en oeuvre à co-courant, ce problème de limitation par l'engorgement ne se pose plus et on peut utiliser des garnissages très efficaces. De plus les fortes vitesses de gaz et/ou de liquide engendrent des turbulences importantes favorables au transfert de matière.

L'invention permet ainsi une réduction importante du volume de garnissage requis au contact entre le gaz et le liquide ce qui induit un avantage économique important quant aux investissements. De plus, une mise en oeuvre en co-courant descendant (colonne verticale avec alimentation des deux phases en tête de colonne) peut permettre d'obtenir des valeurs de perte de charge bien plus faibles que celles obtenues dans le mode à contre-courant et ainsi de limiter les coûts énergétiques de mise en circulation des fluides ce qui pour certains procédés est critique.

Par conséquent, la présente invention donne un avantage économique important, en particulier d'un point de vue de l'investissement.

Par ailleurs, la mise en oeuvre du procédé selon l'invention permet une plus grande modularité qu'un fonctionnement traditionnel, ce qui permet d'avoir des bonnes efficacités même si les débits à traiter varient significativement.

En plus de son objectif de base, à savoir une réduction de volume grâce à une amélioration du contact gaz/liquide, la présente invention offre une grande souplesse d'utilisation et permet de réaliser de nombreuses possibilités à l'échelle du procédé :
- indépendance des débits de gaz et de liquide : dans le cas d'une augmentation du débit de gaz à traiter, on peut également augmenter le débit de liquide,
- possibilité de recycler du liquide : pour un débit gaz donné, on peut augmenter le débit liquide à l'échelle d'une colonne via la mise en place d'un recyclage afin notamment d'éviter des problèmes d'élévation de température ou de faciliter l'obtention d'un meilleur taux de charge,
- possibilité de mise en place d'échangeurs de chaleur classiques sur les lignes reliant deux colonnes successives ou directement en fond de colonne dans la zone assurant un temps de résidence au liquide avant entrée dans la ligne de sortie (par opposition à un cas de configuration classique qui nécessite des ajouts de moyens de collecte et de soutirage et des moyens de réinjection et de redistribution à l'intérieur des colonnes ce qui augmentent leurs hauteurs et leurs coûts).

D'autres caractéristiques et avantages de l'invention seront mieux compris et apparaîtront clairement à la lecture de la description faite ci-après en se référant aux dessins parmi lesquels :
- la figure 1 présente un mode de réalisation de l'invention avec trois colonnes verticales à co-courant,
- la figure 2 présente un mode de réalisation de l'invention avec trois colonnes horizontales à co-courant,
- les figures 3 et 4 schématisent le fonctionnement d'une colonne à co-courant avec recycle,
- la figure 6 représente un mode de réalisation de l'invention avec deux ensembles de deux colonnes à co-courant fonctionnant en parallèle.

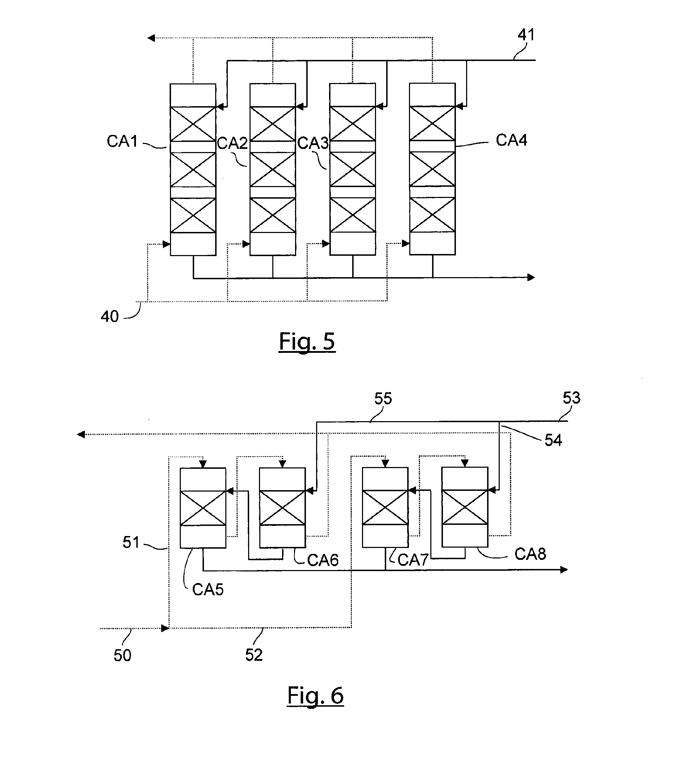

La figure 5 représente un procédé de traitement de gaz selon l'art antérieur, fonctionnant avec quatre colonnes en parallèle.

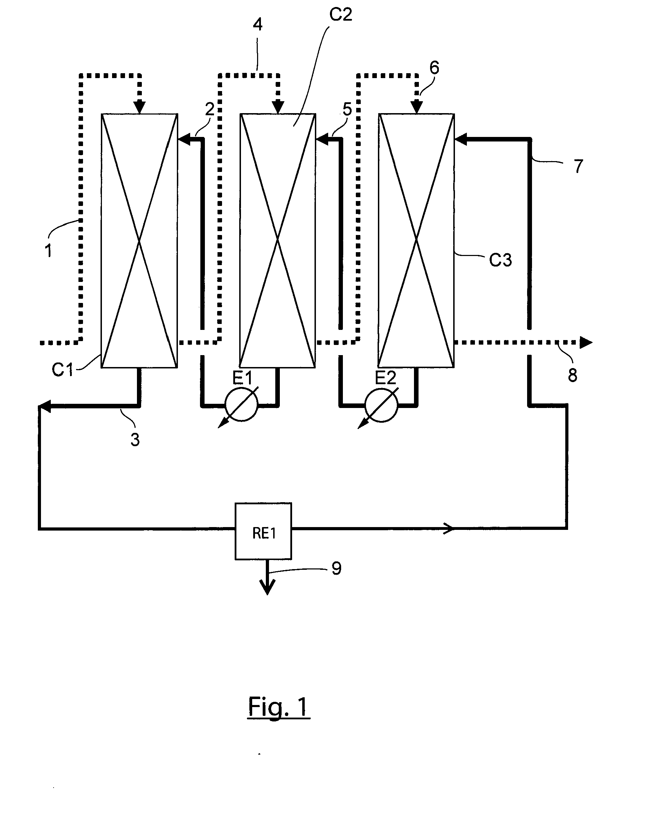

En référence à la figure 1, le gaz à traiter arrive par le conduit 1 à une pression qui peut être comprise entre 1 et 150 bars absolu, et à une température qui peut être comprise entre 10 °C et 100°C.

Le gaz peut être des fumées de combustion, un gaz naturel ou un gaz obtenu en queue du procédé Claus. Le gaz peut également être un gaz de synthèse, un gaz de conversion mis en oeuvre dans les centrales intégrées de combustion de charbon, de brut lourd, de bois ou de gaz naturel, un gaz issu de la fermentation de biomasse, un effluent issu d'une cimenterie ou d'une usine de sidérurgie. Le procédé selon l'invention permet de retirer les composés acides, par exemple le CO₂ et/ou l'H₂S, éventuellement d'autres composés acides tels que le COS, le CS₂, les mercaptans. Le procédé est particulièrement bien adapté pour retirer du CO₂ contenu dans des fumées de combustion.

En référence à la figure 1, le gaz à traiter arrivant par le conduit 1 circule successivement dans les contacteurs à co-courant C1, puis C2, puis C3. Dans un contacteur à co-courant le gaz et le liquide sont introduits à une même extrémité du contacteur, parcourent le contacteur dans le même sens et la même direction et sont évacués du contacteur par une même autre extrémité. La solution absorbante arrivant par le conduit 7 circule successivement dans les contacteurs C3, puis C2 puis C1. Dans chacun des contacteurs, le gaz et le liquide circulent à co-courant, c'est à dire qu'ils traversent le contacteur, dans le même sens et dans la même direction. Selon le mode de réalisation de la figure 1, les contacteurs C1, C2 et C3 sont disposés verticalement et les phases gazeuses et liquides traversent les contacteurs en suivant la direction verticale du haut vers le bas.

Selon l'invention, la solution absorbante peut comporter des amines en solution aqueuse. Les amines sont choisies pour leur capacité à absorber les composés acides. On peut mettre en oeuvre une solution absorbante comportant, en général entre 10% et 80% poids, de préférence entre 20% et 60% poids, en amines. La solution absorbante peut comporter entre 20% et 90% poids, de préférence entre 40% et 80% poids d'eau. La solution absorbante peut par ailleurs contenir un solvant organique, non réactif vis à vis des gaz acides, mais qui permet d'augmenter la solubilité physique d'une impureté, afin d'améliorer son élimination (solvant physique).

On peut choisir les amines parmi des monoamines telles que la MEA (monoéthanolamine), la DEA (diéthanolamine), la MDEA (méthyldiéthanolamine), la DIPA (diisopropylamine), ou la DGA (diglycolamine), mais aussi parmi des multiamines telles que la pipérazine, la N-(2-hydroxyéthyl)piperazine, la N,N,N',N'-Tétraméthylhexane-1,6-diamine, la N,N,N',N'-Tétraéthyldiéthylènetriamine, la 1,2-bis(2-diméthylaminoéthoxy)éthane, la 1,2-bis(2-diéthylaminoéthoxy)éthane et la 1,2-bis(2-pyrolidinoéthoxy)éthane. Ces amines peuvent être employées seules, ou en mélange.

Les amines peuvent également être mélangées à des solvants à caractère physique, par exemple le méthanol, le sulfolane, les polyéthylèneglycols qui peuvent être éthérifiés, les pyrrolydones ou dérivés comme par exemple la N-méthylpyrrolidone, la N-formyl morpholine, l'acétyl morpholine, le carbonate de propylène. Par exemple la solution absorbante comporte entre 10% et 50% poids d'un solvant à caractère physique.

Les contacteurs mis en oeuvre dans le procédé selon l'invention, notamment les contacteurs C1, C2 et C3, sont munis d'éléments de mise en contact, par exemple des garnissages structurés, par exemple commercialisés sous la marque BX ou Mellapak par la société Sulzer Chemtech ou commercialisés sous la marque B1 par la société Montz, ou des garnissages vracs par exemple commercialisés sous la marque IMTP par la société Koch-Glitsch, ou des garnissages décrits dans les documents US 4,296,050 ou USD379096, ou des mélangeurs statiques par exemple commercialisés sous la marque SMV par la société Sulzer Chemtech.

Selon l'invention, on met de préférence en oeuvre des garnissages qui comportent une aire géométrique importante, c'est-à-dire supérieure à 200 m²/m³, de préférence supérieure à 300 m²/m³, voire supérieure à 400 m²/m³ car les contacteurs co-courant autorisent l'utilisation de ces surfaces spécifiques élevées à grand débit, sans risque d'engorgement.

Plus en détail, en référence à la figure 1, le gaz à traiter arrivant par le conduit 1 est mis en contact avec la solution absorbante liquide arrivant par le conduit 2 dans le contacteur C1. La solution absorbante 2 provient du contacteur C2. Le gaz et le liquide circulent dans C1 à travers un élément de mise en contact à co-courant et selon une même direction verticale descendante. Au cours de la mise en contact dans C1, la solution absorbante liquide capte les composés acides, notamment le CO₂ et/ou l'H₂S contenu dans le gaz. En fond de C1, on sépare le gaz du liquide, par exemple en utilisant la gravité. La solution liquide chargée en composés acides est évacuée de C1 par le conduit 3. Le gaz appauvri en composés acides est évacué de C1 par le conduit 4 pour être introduit dans C2.

Le gaz arrivant par le conduit 4 est mis en contact avec la solution absorbante liquide arrivant par le conduit 5 dans le contacteur C2. La solution absorbante liquide 5 provient du contacteur C3. Le gaz et le liquide circulent dans C2 à travers un élément de mise en contact à co-courant et selon une même direction verticale descendante. Au cours de la mise en contact dans C2, la solution absorbante liquide capte les composés acides, notamment le CO₂ et/ou l'H₂S contenu dans le gaz. En fond de C2, on sépare le gaz du liquide, par exemple en utilisant la gravité. La solution liquide chargée en composés acides est évacuée de C2 par le conduit 2 pour être introduite dans le contacteur C1. Le gaz appauvri en composés acides est évacué de C2 par le conduit 6 pour être introduit dans C3.

Le gaz arrivant par le conduit 6 est mis en contact avec la solution absorbante liquide arrivant par le conduit 7 dans le contacteur C3. Le gaz et le liquide circulent dans C3 à travers un élément de mise en contact à co-courant et selon une direction verticale descendante. Au cours de la mise en contact dans C3, la solution absorbante liquide capte les composés acides, notamment le CO₂ et/ou l'H₂S contenu dans le gaz. En fond de C3, on sépare le gaz du liquide, par exemple en utilisant la gravité. La solution liquide chargée en composés acides est évacuée de C3 par le conduit 5 pour être introduite dans le contacteur C2. Le gaz appauvri en composés acides est évacué de C3 par le conduit 8.

La solution absorbante évacuée de C1 par le conduit 3 est introduite dans la section de régénération RE1 pour être régénérée. Dans RE1, la solution absorbante peut être régénérée en étant détendue et/ou en étant chauffée, pour libérer les composés acides sous forme gazeuse. Les composés acides gazeux sont évacués par le conduit 9. La solution absorbante régénérée est évacuée de RE1 par le conduit 7 pour être introduite dans le contacteur C3.

Ainsi, le procédé schématisé par la figure 1 permet de mettre en contact successivement le gaz dans les contacteurs C1, puis C2 puis C3, avec la solution absorbante de moins en moins chargée en composés acides donc de plus en plus performante pour absorber les composés acides de moins en moins concentrés. Par conséquent, on profite des avantages de la circulation à co-courant tout en réalisant les performances d'absorption des composés acides.

De plus, on peut mettre en oeuvre au moins un des échangeurs de chaleur E1 et E2 respectivement disposés sur les conduits 2 et 5 ou directement mis en place dans les fonds des contacteurs C2 et C3 où l'on dispose d'une importante zone de contact possible pour refroidir la solution absorbante afin d'en améliorer ses capacités d'absorption. En effet, d'une part, l'exothermicité de la réaction d'absorption de composés acides par la solution provoque une augmentation de la température de la solution absorbante. D'autre part, la solution absorbante est plus performante à basse température.

De préférence, on utilise le procédé selon la figure 1 pour capter le CO₂ contenu dans des fumées. En effet, il est adapté aux cas où l'on souhaite minimiser la perte de charge car il permet de faire en sorte que l'écoulement soit de type film ruisselant, c'est-à-dire un film de liquide le long des parois du contacteur avec gaz au centre.

La mise en oeuvre du procédé selon la figure 1 peut être réalisée en faisant varier le nombre de contacteurs utilisés, par exemple avec deux contacteurs ou avec trois ou quatre ou avec plus de quatre contacteurs.

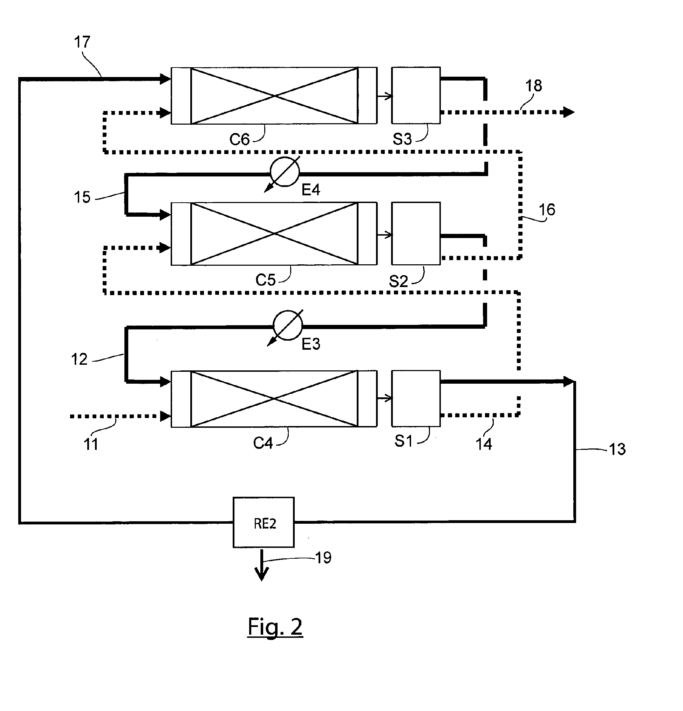

En référence à la figure 2, le gaz à traiter arrivant par le conduit 11 circule successivement dans le contacteur C4, puis C5, puis C6. La solution absorbante arrivant par le conduit 17 circule successivement dans le contacteur C6, puis C5 puis C4. Dans chacun des contacteurs, le gaz et le liquide circulent à co-courant, c'est à dire qu'ils traversent le contacteur, dans le même sens et dans la même direction. Selon le mode de réalisation de la figure 2, les contacteurs C4, C5 et C6 sont disposés horizontalement et les phases gazeuses et liquides traversent les contacteurs en suivant une même direction horizontale. En sortie des contacteurs C4, C5 et C6, on peut mettre en oeuvre des séparateurs gaz/liquide S1, S2 et S3.

Les contacteurs C4, C5 et C6 sont munis d'éléments de mise en contact par exemple des garnissages structurés, par exemple garnissages structurés commercialisés sous la marque BX ou Mellapak produits par la sociétés Sulzer Chemtech ou commercialisés sous la marque B1 produit par la société Montz, et de préférence des mélangeurs statiques qui acceptent de plus fortes pertes de charges, comme par exemple ceux mentionnés dans le document "Hydrodynamics and mass transfer in gas-liquid flow through static mixers", Heyouni et al. 2002, Chem. Eng. Sci., 57, 3325-3333.

Plus en détail, le gaz à traiter arrivant par le conduit 11 est mis en contact avec la solution absorbante liquide arrivant par le conduit 12 dans le contacteur C4. La solution absorbante 12 provient du contacteur C5. Le gaz et le liquide circulent dans C4 à travers un élément de mise en contact à co-courant et selon la même direction horizontale. Au cours de la mise en contact dans C4, la solution absorbante liquide capte les composés acides, notamment le CO₂ et/ou l'H₂S contenu dans le gaz. Après avoir circulé à travers C4, on sépare le gaz du liquide en utilisant le séparateur S1. S1 peut être un dispositif distinct ou inclus dans C4. La solution liquide chargée en composés acides est évacuée de S1 par le conduit 13. Le gaz appauvri en composés acides est évacué de S1 par le conduit 14 pour être introduit dans C5.

Le gaz arrivant par le conduit 14 est mis en contact avec la solution absorbante liquide arrivant par le conduit 15 dans le contacteur C5. La solution absorbante liquide 15 provient du contacteur C6. Le gaz et le liquide circulent dans C5 à travers un élément de mise en contact à co-courant et selon la même direction horizontale. Au cours de la mise en contact dans C5, la solution absorbante liquide capte les composés acides, notamment le CO₂ et/ou l'H₂S contenu dans le gaz. Après avoir circulé à travers C5, on sépare le gaz du liquide en utilisant le séparateur S2. S2 peut être un dispositif distinct ou inclus dans C5. La solution liquide chargée en composés acides est évacuée de S2 par le conduit 12 pour être introduite dans le contacteur C4. Le gaz appauvri en composés acides est évacué de S2 par le conduit 16 pour être introduit dans C6.

Le gaz arrivant par le conduit 16 est mis en contact avec la solution absorbante liquide arrivant par le conduit 17 dans le contacteur C6. Le gaz et le liquide circulent dans C6 à travers un élément de mise en contact à co-courant et selon une même direction horizontale. Au cours de la mise en contact dans C6, la solution absorbante liquide capte les composés acides, notamment le CO₂ et/ou l'H₂S contenu dans le gaz. Après avoir circulé à travers C6, on sépare le gaz du liquide en utilisant le séparateur S3. S3 peut être un dispositif distinct ou inclus dans C6. La solution liquide chargée en composés acides est évacuée de C6 par le conduit 15 pour être introduite dans le contacteur C6. Le gaz appauvri en composés acides est évacué de C6 par le conduit 18.

La solution absorbante évacuée de S1 par le conduit 13 est introduite dans la section de régénération RE2 pour être régénérée. Dans RE2, la solution absorbante peut être régénérée en étant détendue et/ou en étant chauffée, pour libérer les composés acides sous forme gazeuse. Les composés acides gazeux sont évacués par le conduit 19. La solution absorbante régénérée est évacuée de RE2 par le conduit 17 pour être introduite dans le contacteur C6.

De plus, on peut mettre en oeuvre au moins l'un des échangeurs de chaleur E3 et E4 respectivement disposés sur les conduits 12 et 15 pour refroidir la solution absorbante ou dans les zones de séparation S1, S2, S3.

De préférence, on utilise le procédé selon la figure 2 pour capter le CO₂ et/ou l'H₂S contenus dans un gaz naturel. En effet, l'utilisation de contacteurs horizontaux fonctionnant à co-courant permet de faire circuler le gaz et le liquide dans des régimes hydrodynamiques très favorables au transfert comme dans le cas d'un écoulement à bulles fortement dispersées, comme montré dans le document "Hydrodynamics and mass transfer in gas-liquid flow through static mixers", Heyouni et al. 2002, Chem. Eng. Sci., 57, 3325-3333. Ce mode de mise en oeuvre génère plus de perte de charge et est de ce fait bien adapté à la problématique du traitement du gaz naturel sous pression. De plus il est moins sensible au mouvement qu'un écoulement à film et peut être intéressant dans les cas de lavage de gaz sur plateforme en mer soumise au tangage et au roulis.

La mise en oeuvre du procédé selon la figure 2 peut être réalisée en faisant varier le nombre de contacteurs utilisés, par exemple avec deux contacteurs ou trois, ou avec quatre ou plus de quatre contacteurs.

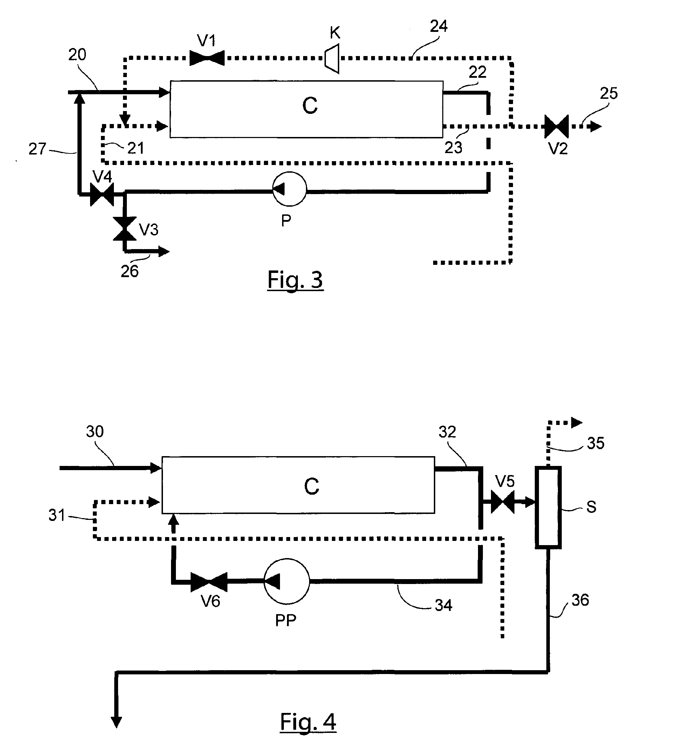

Les figures 3 et 4 proposent d'effectuer un recycle de liquide et/ou de gaz, de la sortie vers l'entrée d'un contacteur. Le recycle peut être mis en oeuvre sur un ou plusieurs contacteurs à co-courant du procédé selon l'invention. Par exemple, les recycles peuvent être mis en oeuvre dans le cas de contacteurs verticaux décrits en référence à la figure 1 ou dans le cas de contacteurs horizontaux décrits en référence à la figure 2.

En référence à la figure 3, la solution absorbante 20 est mise en contact dans le contacteur C avec le gaz à traiter arrivant par le conduit 21. Après avoir traversé le contacteur C, la solution absorbante est évacuée par le conduit 22 et le gaz par le conduit 23. Selon l'invention, on peut faire circuler une portion du liquide 22, ou alternativement une portion du gaz 23 ou alternativement une portion du liquide 22 et une portion du gaz 23, de la sortie jusqu'à l'entrée du contacteur C. De préférence, on recycle une portion du liquide 22 dans le contacteur C. La solution absorbante liquide 22 est pompée par la pompe P puis séparée en deux fractions liquides, par exemple par les vannes V3 et V4. Une fraction liquide est évacuée par le conduit 26 soit pour alimenter un autre contacteur soit pour alimenter le régénérateur. L'autre fraction liquide est recyclée par le conduit 27 pour être de nouveau introduite à l'entrée du contacteur C, par exemple en étant mélangée avec le liquide circulant dans le conduit 20. Pour effectuer un recycle d'une portion du gaz 23 dans le contacteur C, le gaz 23 est divisé en deux fractions gazeuses par exemple au moyen des vannes V1 et V2. Une fraction gazeuse est évacuée par le conduit 25. Une autre fraction gazeuse est recyclée par le conduit 24 pour être introduite à l'entrée du contacteur C, par exemple en étant mélangée avec le gaz circulant dans le conduit 21. Pour compenser les pertes de charges subies dans le contacteur C, la fraction gazeuse 24 peut être comprimée par le compresseur K. Pour effectuer un recycle d'une portion de gaz 23 et d'une portion de liquide 22, on met en oeuvre les deux conduits de recycle 24 et 27.

En référence à la figure 4, la solution absorbante 30 est mise en contact dans le contacteur C avec le gaz à traiter arrivant par le conduit 31. Après avoir traversé le contacteur C, le mélange de solution absorbante et de gaz est évacué par le conduit 32. Le mélange de gaz et de liquide 32 est divisé en deux fractions, par exemple au moyen des vannes V5 et V6. Une fraction du mélange de gaz et de liquide est recyclée par le conduit 34 pour être introduite à l'entrée du contacteur C. Pour compenser les pertes de charges subies dans le contacteur C, la fraction du mélange de gaz et de liquide 34 est comprimée par la pompe polyphasique PP avant d'être introduite dans C. L'autre fraction de mélange de gaz et de liquide est introduite dans le séparateur de gaz et de liquide S pour produire une solution absorbante liquide évacuée par le conduit 36 et une fraction gazeuse évacuée par le conduit 35.

Les exemples de fonctionnement présentés ci-après permettent de comparer et de montrer des avantages de l'invention par rapport à l'art antérieur.

Les résultats présentés dans le tableau 1 ci-dessous montrent les caractéristiques et le dimensionnement de différents procédés pour décarbonater des fumées de combustion issues d'une centrale électrique au charbon de 630 MWe. Les fumées à traiter ont un débit de 1 750 000 Nm³/h avec une composition de 13,2% volume de CO₂. On met en oeuvre des procédés de captage de CO₂ ayant un taux de captage de 90% du CO₂ contenu dans les fumées grâce à la circulation d'un débit de 8300 m³/h de solution absorbante composée d'une solution aqueuse de MEA à 30%poids, ayant un taux de charge en entrée et en sortie respectif de 0,24 et de 0,47. On compare un cas de mise en oeuvre selon l'art antérieur avec deux cas de mise en oeuvre selon la présente invention. Dans tous les cas, le diamètre des colonnes est fixé constant et égal à 8 m.

Le cas selon l'art antérieur est schématisé par la figure 5. Le flux de fumées à traiter 40 est divisé en quatre pour alimenter chacune des quatre colonnes CA1, CA2, CA3 et CA4, induisant une vitesse de gaz de 2,4 m/s dans les colonnes. Les colonnes sont équipées du garnissage structuré Mellapak 250.Y développant une aire géométrique de 250 m²/m³. Pour les conditions de débit de liquide retenues, l'efficacité de mouillage est de 80% ce qui correspond à une aire efficace, ae, de 200 m²/m³. La solution absorbante arrivant par le conduit 41 est scindée en quatre fractions qui alimentent chacune l'une des colonnes CA1, CA2, CA3 et CA4. La hauteur requise pour la zone de contact dans les colonnes CA1 à CA4 est de 18m soit un volume de garnissage total de près de 3600 m³. Cette hauteur est déterminée via l'utilisation d'un modèle d'absorbeur intégrant des modèles de cinétique et de thermodynamique propres à une solution aqueuse de MEA 30% poids et des modèles de transfert de masse propres au garnissage structuré Mellapak 250.Y, qui permettent ainsi de calculer les vitesses de réaction du CO₂ avec l'amine, les équilibres liquide-vapeur et le transfert réactif.

Un premier cas de mise en oeuvre du procédé selon l'invention est schématisé par la figure 6. Selon la présente invention, on utilise un garnissage beaucoup plus efficace qui développe une aire efficace de 500 m²/m³ tout en réduisant la section de passage total. En référence à la figure 6, on divise le flux de gaz 50 en deux fractions gazeuses 51 et 52 qui sont mises en contact à co-courant avec une solution absorbante successivement dans deux contacteurs. La solution absorbante arrivant par le conduit 53 est également divisée en deux fractions liquides 54 et 55 qui sont respectivement mises en contact à co-courant avec les fractions gazeuses dans deux contacteurs à co-courant. La fraction gazeuse 51, respectivement 52, est mis en contact à co-courant dans CA5 puis CA6, respectivement CA7 puis CA8, avec la fraction liquide 55, respectivement 54. Ainsi en divisant le flux en deux et en passant à 2 étages de contact, soit 4 colonnes au total, la hauteur des contacteurs requise pour obtenir les mêmes performances que celles du cas 1 selon l'art antérieur est de seulement 5,9 m, ce qui induit un volume de garnissage de près de 1200 m³, soit une réduction de près de 70% de la taille des installations.

Un deuxième cas de mise en oeuvre du procédé selon l'invention est schématisé par la figure 1, dans lequel on met en oeuvre trois contacteurs fonctionnant à co-courant et sans division du flux de fumées à traiter. Dans les contacteurs C1, C2 et C3 sont équipées de contacteurs qui développent une aire efficace, ae, de 650 m²/m³. Cette forte valeur est obtenue d'une part du fait de l'utilisation de mélangeurs statiques très efficaces et d'autre part par les fortes vitesses de liquide et de gaz générant une turbulence importante favorable aux transfert de masse et à la création d'aire interfaciale. Pour obtenir des performances équivalentes à celles du cas 1 ou 2 et en réduisant le nombre de colonne, on augmente la vitesse de circulation du gaz à 9,7 m/s à travers les contacteurs C1, C2 et C3. On, constate que la hauteur requise est de seulement 5.2 m par contacteur ce qui correspond à un volume de garnissage de 784 m³, soit 78% moins que le cas de référence ou 34% de moins que le cas 1 selon l'invention. Néanmoins, l'augmentation de la vitesse du gaz génère des pertes de charge sensiblement plus importantes. Un optimum, dépendant des utilisateurs et de leurs objectifs, dépend de la répartition entre les coûts d'investissements liés au nombre et à la taille des colonnes, couramment nommées "capex" et les coûts de fonctionnement liés à la puissance électrique consommée requise pour vaincre les pertes de charge, couramment nommés "opex". On peut donc préférer le cas 1 selon l'invention au cas 2 selon l'invention si les aspects Opex priment.

Le tableau 1 donne les caractéristiques suivantes :
ae : aire efficace des contacteurs en m²/m³
N_col_Tot : nombre de colonnes mises en oeuvre dans le procédé
H-col : hauteur du contacteur dans les colonnes en m
Vol : volume total de contacteur installé dans les colonnes en m³
Vsg : vitesse de circulation du gaz dans les contacteurs en m/s
Vol. Red. : taux de réduction du contacteur par rapport au cas de l'art antérieur en %

**Tableau 1**

| | **ae (m2/m3)** | **N_col_Tot (-)** | **H-col (m)** | **Vol (m3)** | **Vsg (m/s)** | **Vol. Red. (%)** |
|---|---|---|---|---|---|---|
| **Art antérieur** | 200 | 4 | 18 | 3619 | 2.4 | |
| **Cas 1 selon l'invention** | 500 | 4 | 5.9 | 1186 | 4.8 | -67% |
| **Cas 2 selon l'invention** | 650 | 3 | 5.2 | 784 | 9.7 | -78% |

Par conséquent, lorsque les quantités de gaz à traiter sont importantes, comme en particulier celui du captage de CO₂ en post-combustion sur centrale thermique, le procédé selon l'art antérieur nécessite que le flux de fumées à traiter soit subdivisé en plusieurs flux, traités en parallèle dans des colonnes dédiées. Le fait de fonctionner en mode co-courant selon notre invention et donc de pouvoir passer plus de débit dans une seule colonne permet d'éviter ou de limiter cette subdivision. Par rapport au cas de mise en oeuvre selon l'art antérieur avec quatre colonnes en parallèles, on peut selon l'invention passer à trois colonnes en séries avec un fonctionnement à l'échelle de chacune des colonnes en mode co-courant, et avec un fonctionnement à l'échelle des trois colonnes en mode contre-courant. On peut également passer à une division en deux fractions en circulant dans deux colonnes en réduisant la hauteur des colonnes. En conclusion, l'exemple montre que le schéma selon l'invention permet de réduire les capex (coûts d'investissements liés aux nombre et taille des colonnes).

## Revendications

1. Procédé de désacidification d'un gaz de charge comportant au moins l'un des composés acides CO₂ et H₂S, dans lequel on effectue les étapes suivantes :
a) on met en contact ledit gaz de charge avec une solution absorbante liquide enrichie en composés acides produite à l'étape b) dans un premier contacteur à co-courant, le gaz de charge et la solution absorbante parcourant selon une même direction le premier contacteur depuis une entrée jusqu'à une sortie, pour produire un gaz appauvri en composés acides et une solution absorbante chargée en composés acides,
b) on met en contact ledit gaz appauvri en composés acides avec une solution absorbante liquide dans un deuxième contacteur à co-courant, le gaz et la solution absorbante parcourant selon une même direction le deuxième contacteur depuis une entrée jusqu'à une sortie, pour produire un gaz pauvre en composés acides et ladite solution absorbante liquide enrichie en composés acides mise en oeuvre à l'étape a).

2. Procédé selon la revendication 1 dans lequel on effectue l'étape suivante :
c) on met en contact ledit gaz pauvre en composés acides avec un liquide absorbant dans un troisième contacteur à co-courant, le gaz et le liquide parcourant selon une même direction le troisième contacteur depuis une entrée jusqu'à une sortie, pour produire un gaz traité et la solution absorbante liquide mise en oeuvre à l'étape b).

3. Procédé selon l'une des revendications 1 et 2, dans lequel le gaz et le liquide parcourent les contacteurs à co-courant selon une direction verticale descendante.

4. Procédé selon l'une des revendications 1 et 2, dans lequel le gaz et le liquide parcourent les contacteurs à co-courant selon une direction horizontale.

5. Procédé selon l'une des revendications précédentes, dans lequel les contacteurs comportent un garnissage qui développe une aire géométrique supérieure à 200 m²/m³ et de préférence supérieure à 400m²/m³.

6. Procédé selon l'une des revendications précédentes, dans lequel on fait circuler le gaz dans les contacteurs à une vitesse supérieure à 1m/s, de préférence supérieure à 2m/s, voire 4m/s.

7. Procédé selon l'une des revendications précédentes, dans lequel on prélève une portion d'au moins un des deux flux choisis parmi le gaz et la solution absorbante liquide issu d'un des contacteurs, puis on introduit ladite portion à l'entrée dudit contacteur.

8. Procédé selon l'une des revendications précédentes, dans lequel on prélève une portion d'un mélange composé du gaz et de la solution absorbante issu de la sortie d'un des contacteurs, puis on introduit ladite portion à l'entrée dudit contacteur.

9. Procédé selon l'une des revendications 7 et 8, dans lequel on augmente la pression de ladite portion avant de l'introduire dans le contacteur.

10. Procédé selon l'une des revendications précédentes, dans lequel, avant d'effectuer l'étape a), on refroidit ladite solution absorbante liquide enrichie en composés acides produite à l'étape b).

11. Procédé selon l'une des revendications précédentes, dans lequel on régénère la solution absorbante chargée en composés acides produite à l'étape a) de manière à libérer des composés acides et produire ladite solution absorbante mise en oeuvre à l'étape b) ou ledit liquide absorbant mis en oeuvre à l'étape c).

12. Procédé selon l'une des revendications précédentes, dans lequel la solution absorbante est composée d'une solution aqueuse comportant des amines.

13. Procédé selon l'une des revendications précédentes, dans lequel le gaz de charge est choisi parmi l'un des gaz suivants : une fumée de combustion, un gaz naturel, un gaz obtenu en queue du procédé Claus, un gaz de synthèse, un gaz issu de la fermentation de biomasse, un effluent issu d'une cimenterie et un gaz issu d'une usine de sidérurgie.
